Europäisches Patentamt

European Patent Office

Office européen des brevets

(11) Veröffentlichungsnummer: **0 664 625 A2**

(12) **EUROPÄISCHE PATENTANMELDUNG**

(21) Anmeldenummer: **94119862.4**

(22) Anmeldetag: **15.12.94**

(51) Int. Cl.⁶: **H04L 1/20**, H04L 25/02,
H04L 25/03, H04L 27/22,
H04L 7/02, H04L 7/04

(30) Priorität: **21.01.94 DE 4401786**

(43) Veröffentlichungstag der Anmeldung:
**26.07.95 Patentblatt 95/30**

(84) Benannte Vertragsstaaten:
**DE FR GB IT SE**

(71) Anmelder: **AEG MOBILE COMMUNICATION GmbH**
**Wilhelm-Runge-Strasse 11**
**D-89081 Ulm (DE)**

(72) Erfinder: **Langewellpot, Ulrich, Dr.**

**verstorben (DE)**

(74) Vertreter: **Körner, Ekkehard, Dipl.-Ing.**
**Patentanwalt**
**Maximilianstrasse 58**
**D-80538 München (DE)**

(54) Verfahren zur Prüfung der Qualität eines Übertragungskanals.

㉗ Bei einem Verfahren zur empfangsseitigen Prüfung der Qualität eines Übertragungskanals, auf dem modulierte digitale Daten übertragen werden, in denen in Abständen eine empfangsseitig bekannte Trainingssequenz enthalten ist, deren Datensymbole empfangsseitig digitalisiert und anschließend demoduliert werden, werden die demodulierten Datensymbole mit den Symbolen der gespeicherten Trainingssequenz verglichen, und aus dem Vergleichsergebnis wird ein Kriterium für die augenblicklich vorhandenen Qualität des Übertragungskanals abgeleitet.

FIG. 3

EP 0 664 625 A2

Die Erfindung bezieht sich auf ein verfahren zur empfangsseitigen Prüfung der Qualität eines Kanals, auf dem modulierte digitale Daten übertragen werden, in denen in Abständen eine empfangsseitig bekannte Trainingssequenz enthalten ist.

Aus der DE-OS 40 01 592 ist ein Verfahren der o.a. Art bekannt, bei dem eine lineare Modulation vorausgesetzt wird. Dabei wird das Empfangssignal einem Kanalschätzer zugeleitet wird, dem auch die in einem Speicher gespeicherte Trainigsdatenfolge zugeführt wird. Die Trainingsdatenfolge ist so gewählt, daß sie eine impulsförmige Autokorrelationsfunktion aufweist. Durch Kreuzkorrelation der im Eingangssignal enthaltenen modulierten und eventuell verzerrten Trainingsdatenfolge mit der empfangsseitig gespeicherten unverzerrten Trainingsdatenfolge ermittelt der Kanalschätzer eine Kanalimpulsantwort. Diese wird zur Demodulation verwendet. Als Demodulator kann ein Matched Filter verwendet werden. Bei Mehrwegeausbreitung kann auch ein Equalizer notwendig sein. Zur Gewinnung eines Bewertungskriteriums der Empfangsgüte des empfangenen Signals wird die geschätzte Impulsantwort einer Anordnung zur Faltung von Datenfolgen zugeführt, die auch die dem empfangsseitigen Speicher entnommene Trainingsdatenfolge für die Faltung erhält. Durch Faltung der Trainingsdatenfolge mit der Kanalimpulsantwort wird eine Schätzung für den ungestört empfangenen Signalausschnitt, der die Trainingsdatenfolge enthält, durchgeführt. Durch Vergleich mit dem tatsächlich empfangenen Signalausschnitt kann ein Qualitätskriterium abgeleitet werden.

Das bekannte Verfahren erfordert zur Ausführung eine etwas aufwendige Apparatur, weshalb der Erfindung die Aufgabe zugrundeliegt, ein Verfahren der vorgenannten Art anzugeben, das sich mit geringem Aufwand realisieren läßt. Bei Anwendung des Qualitätskriteriums in einer empfangsseitigen Einrichtung zur Dekodierung von z.B. Faltungskodes soll sich ein hoher Kodiergewinn erzielen lassen. Weiterhin soll das Verfahren auch zur Verarbeitung nichtlinear modulierter Signale geeignet sein.

Diese Aufgabe wird durch die im Anspruch 1 angegebene Erfindung gelöst. Vorteilhafte Ausgestaltungen der Erfindung sind Gegenstand der Unteransprüche.

Die Erfindung wird nachfolgend unter Bezugnahme auf die Zeichnungen näher erläutert. Es zeigt:

Fig. 1    ein Blockschaltbild einer Anordnung zur Ausführung des erfindungsgemäßen Verfahrens,

Fig. 2    ein Blockschaltbild einer Anordnung zur Ausführung des erfindungsgemäßen Verfahrens bei Verwendung eines beliebigen, z.B. nichtlinearen Modulationsverfahrens, wobei für den Demodulator beliebige bekannte Verfahren verwendet werden können, und

Fig. 3    ein Blockschaltbild einer Einrichtung zur Ausführung des bekannten Verfahrens.

Es soll eine digitale Übertragung über einen zeitvarianten und gestörten Kanal betrachtet werden. Wie vorausgesetzt, wird zusammen mit dem digitalen, modulierten Signal von Zeit zu Zeit eine Trainingssequenz mit dem Empfänger bekannten Symbolen übertragen. Symbole sind reelle oder komplexe Zahlen aus einem diskreten und endlichen Wertebereich. Es gibt eine Zuordnung zwischen der zu übertragenden Information (Bits) und den Symbolen. Es können einzelne Bits oder Gruppen von Bits auf ein Symbol abgebildet werden. Die Symbole sollen im Sender dem Modulator am Eingang zur Verfügung stehen. Bei linearer Modulation kann z.B. die Modulation durch eine Faltung der Symbole mit einem Modulationsimpulös beschrieben werden.

Im Empfänger wird das Empfangssignal zunächst digitalisiert und abschnittsweise abgespeichert. Die übertragenen Symbole müssen demoduliert werden. Dazu kann z.B. bei linearer Modulation mit Hilfe der Trainingssequenz die Kanalimpulsantwort ermittelt werden. Letzteres ist in Übereinstimmung mit dem Stand der Technik nach der genannten DE-OS 40 01 592.

Dann kann die Demodulation durchgeführt werden. Dieses kann z.B. mit Hilfe eines Adaptive Matched Filters ausgeführt werden. Bei Mehrwegeausbreitung kann noch ein Entzerrer erforderlich sein. Schließlich liegen die demodulierten Symbole vor. Es können auch andere Demodulationsverfahren entsprechend dem Stand der Technik verwendet werden, um z.B. nichtlinear modulierte Signale verarbeiten zu können.

Die demodulierten Symbole können sogenannte "Hard Decision" Werte sein, das sind solche, bei denen der binäre Zustand eindeutig entschieden worden ist. Dies bedeutet, daß der Empfänger eine endgültige Entscheidung über ein Symbol getroffen hat.

Die demodulierten Symbole können aber sogenannte "Soft Decision" Werte sein, das sind solche, die eine Wahrscheinlichkeitsaussage zu der diskreten Beurteilung des demodulierten Wertes enthalten. Ein jedes solches Symbol besitzt dann ein individuelles, nur für das betreffende Symbol gültige Zuverlässigkeitsmaß. Oft ist dieses Maß allerdings nicht normiert. Man kann z.B. als Soft Decision Wert einfach den Ausgangswert des Adaptive Matched Filters benutzen. Ein Soft Decision Wert sd kann im allgemeinen in der folgenden Form beschrieben werden:

$$sd = A \cdot a + n$$

wobei A die mittlere Amplitude des Empfangssignals, a ein reelles oder komplexes Symbol aus einem diskreten Wertebereich, und n eine Störgröße ist.

Die mittlere Energie eines Symbols ist durch den Erwartungswert $E(a \cdot a^*)$ gegeben. Diese kann in einer bevorzugten Ausführungsform auf eins normiert werden.

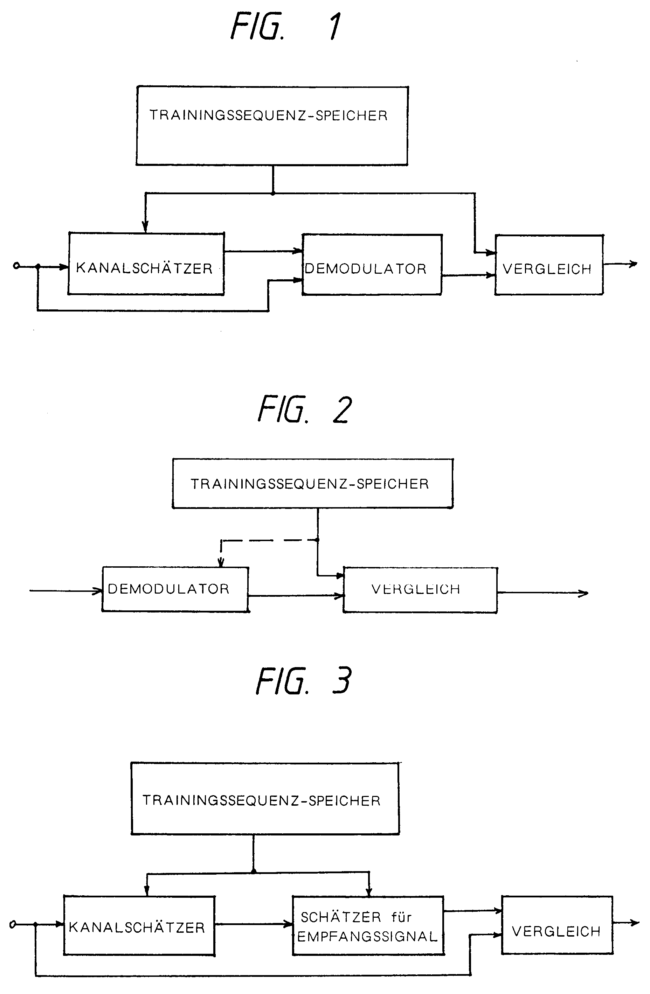

Mit Hilfe der Trainingssequenz wird nun ein Qualitätsmaß für einen bestimmten zeitlichen, aus mehreren Symbolen bestehenden Abschnitt bestimmt. Dazu werden gemäß Fig. 1 oder 2 die demodulierten Symbole mit der gespeicherten Trainingssequenz verglichen. Es kann z.B. bei Soft Decision Werten das Signal/Rausch-Verhältnis bestimmt werden.

Zunächst wird ein Schätzwert der Amplitude des Empfangssignals bestimmt:

$$\hat{A} = \frac{1}{N} \sum_{i=0}^{N-1} Re(sd_i \cdot a_i^*)$$

wobei $a_i^*$ die konjugiert komplexen abgespeicherten Symbole der Trainingssequenz sind. Der Schätzwert A ist die mit einer Unsicherheitsaussage verknüpfte Amplitude des Empfangssignals.

Als nächstes wird die Streuung bestimmt:

$$\sigma^2 = \frac{1}{N} \sum_{i=0}^{N-1} sd_i \cdot sd_i^* - \hat{A}^2$$

Die Streuungen werden also aus dem Vergleich der Soft Decision Werte mit der Trainingssequenz ermittelt.

Aus geschätzter Amplitude und Streuung kann nun das Signal/Rausch-Verhältnis als Qualitätskriterium wie folgt bestimmt werden:

$$SNR = \frac{\hat{A}^2}{\sigma^2}$$

Es soll nun eine Anwendung des Qualitätskriteriums für eine Signalübertragung beschrieben werden, die einen Faltungskode mit Interleaving zur Fehlerkorrektur benutzt. Interleaving bedeutet, daß die Reihenfolge der empfangenen Symbole vor der Dekodierung verändert wird. Der Faltungskode soll mit Hilfe einer Maximum Likelihood Sequency Schätzung dekodiert werden.

Bei zeitvarianten Übertragungskanälen hat das Interleaving den Vorteil, daß Bündelfehler im Kodewort verteilt werden und damit eine bessere Dekodierung eines Faltungskodes möglich wird. Wichtig ist dabei, daß dann jedes Bit eine Zuverlässigkeitsinformation trägt. Der vom Demodulator gelieferte Soft Decision Wert reicht hierbei gewöhnlich nicht aus, da er häufig nicht normiert ist und nur die Qualität des betreffenden Symbols relativ zu den Nachbarsymbolen angibt. Der Schätzwert der Amplitude des Soft Decision Wertes ist z.B. bei einem Matched Filter gleich der Amplitude des Eingangssignals. Nur bei konstanter zeitlicher Störleistung ergibt sich ein absolutes Qualitätsmaß. Ändert sich die Störleistung aber zeitlich, ist eine Normierung erforderlich. Ein solcher Zustand liegt bei einem Mobilfunkkanal mit Gleichkanalstörung vor.

Bei der Dekodierung wird eine reelle oder komplexe Symbolfolge $a_i$ gesucht, bei der die Wahrscheinlichkeitsdichte

$$p = K e^{- \sum_i |sd_i - \hat{A}_i a_i|^2 / \sigma_i^2}$$

maximal ist. Dabei ist K eine Konstante, $Sd_i$ ist der i-te reelle oder komplexe Soft Decision Wert, $\hat{A}_i$ ist der Schätzwert von dessen Amplitude und $\sigma_i^2$ ist dessen Streuung.

Man kann auch die reelle oder komplexe Symbolfolge $a_i$ suchen, bei der der folgende Ausdruck maximal wird:

$$\sum_i 2 Re\{sd_i a_i^*\} \frac{\hat{A}_i}{\sigma_i^2} - \frac{\hat{A}_i^2}{\sigma_i^2} a_i^2$$

Bei Symbolen konstanter Amplitude kann der zweite Ausdruck in der Summe weggelassen werden. Da Amplitude und Streuung des Empfangssignals gewöhnlich kurzzeitig konstant sind, können sie mit dem oben beschriebenen Verfahren ermittelt werden. Ein mögliches Verfahren zur Maximierung des vorgenannten Ausdrucks ist durch den Viterbi-Algorithmus gegeben.

Das mit Hilfe der Erfindung erhaltene Qualitätskriterium kann vorteilhaft zur Wichtung von Frequenzablagemessungen in eienm Frequenzregelkreis oder zur Wichtung von Zeitablagemessungen in einem Taktregelkreis verwendet werden. Überhaupt ist es auch zur Wichtung von demodulierten Symbolen einsetzbar, wobei solche gewichteten Symbole oder Summen davon für eine Maximum-Likelihood-Schätzung verwendet werden können.

**Patentansprüche**

1. Verfahren zur empfangsseitigen Prüfung der Qualität eines Übertragungskanals, auf dem modulierte digitale Daten übertragen werden, in denen in Abständen eine empfangsseitig bekannte Trainingssequenz enthalten ist, deren Datensymbole empfangsseitig digitalisiert und demoduliert werden, die demodulierten Datensymbole mit den Symbolen der gespeicherten Trainingssequenz verglichen werden und aus dem Vergleichsergebnis ein Kriterium für die augenblicklich vorhandenen Qualität des Übertragungskanals abgeleitet wird.

2. Verfahren nach Anspruch 1, bei dem aus dem Vergleich der demodulierten Datensymbole mit den Symbolen der gespeicherten Trainingssequenz ein Schätzwert der mittleren Amplitude der Werte der demodulierten Datensymbole, bezogen auf die mittlere Amplitude des Wertebereichs der Symbole, berechnet wird.

3. Verfahren nach Anspruch 2, bei dem die Energie der Werte der demodulierten Datensymbole durch Quadrieren und Akkumulation berechnet wird und die Streuung der Werte aus dem Quadrat des Schätzwertes der mittleren Amplitude und der Energie derselben unter Berücksichtigung der mittleren Energie des Wertebereichs der Symbole der Trainingssequenz berechnet wird.

4. Verfahren nach Anspruch 3, bei dem das Signal/Rausch-Verhältnis des Übertragungskanals aus dem Quotienten des Quadrats der mittleren Amplitude der Werte der demodulierten Datensymbole und der Streuung derselben als Qualitätskriterium berechnet wird.

5. Verfahren nach Anspruch 3, bei dem das Verhältnis aus dem Schätzwert der mittleren Amplitude der Wert der demodulierten Datensymbole und der Streuung derselben als Qualitätskriterium berechnet wird.

6. Verfahren nach einem der vorhergehenden Ansprüche, bei dem das Qualitätskriterium zur Wichtung von Frequenzablagemessungen in einem Frequenzregelkreis versendet wird.

7. Verfahren nach einem der Ansprüche 1 bis 4, bei dem das Qualitätskriterium zur Wichtung von Zeitablagemessungen in einem Taktregelkreis verwendet wird.

8. Verfahren nach einem der Ansprüche 1 bis 4, bei dem das Qualitätskriterium zur Wichtung von demodulierten Symbolen verwendet wird.

9. Verfahren nach Anspruch 8, bei dem entsprechende gewichtete Symbole oder Summen von gewichteten Symbolen für eine Maximum-Likelihood-Schätzung verwendet werden.

10. Verfahren nach Anspruch 7 oder 8, bei dem eine reelle oder komplexe Symbolsequenz $a_i$ gesucht wird, bei der der Ausdruck

$$\sum_i 2Re\{sd_i a_i^*\}\frac{\hat{A}_i}{\sigma_i^2}$$

maximal wird, worin $sd_i$ das i-te reelle oder komplexe demodulierte Datensymbol ist, $\hat{A}_i$ der Schätzwert von dessen Amplitude und $\sigma_i^2$ dessen Streuung und $a_i^*$ die konjugiert komplexe gesuchte Symbolsequenz ist.

11. Verfahren nach Anspruch 8 oder 9, bei dem eine reelle oder komplexe Symbolsequenz $a_i$ gesucht wird, bei der der Ausdruck

$$\sum_i 2Re\{sd_i a_i^*\}\frac{\hat{A}_i}{\sigma_i^2} - \frac{\hat{A}_i^2}{\sigma_i^2}a_i^2$$

maximal wird, wobei $\sigma_i^2$, $sd_i$, $a_i^*$ und $\hat{A}_i$ wie in Anspruch 10 definiert sind.

# FIG. 1

# FIG. 2

# FIG. 3

5